# EUROPEAN PATENT APPLICATION

(11) **EP 1 326 435 A2**
(43) Date of publication of application: **09.07.2003**
(21) Application number: 02258739.8
(22) Date of filing: 18.12.2002
(51) Int. Cl.: H04N 5/44

(54) **Image processing apparatus and television receiver using the same**

(30) Priority: 21.12.2001 JP 2001388940
(71) Applicant: NEC Electronics Corporation, Kawasaki, Kanagawa 211-8668 (JP)
(72) Inventor: Kozai, Kazuhiro, c/o NEC Micro Systems, Ltd., Kawasaki-shi, Kanagawa (JP)
(74) Representative: Gill, David Alan

(57) **Abstract**

There are included a storage section (44) for storing a first image data (41) as an image data for a display unit having a first aspect ratio as a predetermined aspect ratio, an image operation section (46) for providing a horizontal display position (DDA) as a position in a horizontal direction at which the first image data (41) is displayed on a display screen having a second aspect ratio different from the first aspect ratio, and a third enlargement ratio selected from a first enlargement ratio at which the first image data (41) is enlarged non-linearly and a second enlargement ratio at which the first image data (41) is enlarged linearly on the basis of the horizontal display position (DDA); and an image output section (45) for reading the first image data (41) to be enlarged at the third enlargement ratio from the storage section (44), enlarging the first image data (41) at the third enlargement ratio, and outputting a second image data (43) as the image data to be displayable at the horizontal displayposition (DDA) on the basis of the third enlargement ratio and the horizontal display position (DDA).

## Description

### BACKGROUND OF THE INVENTION

### 1. Field of the invention

The present invention relates to an image processing apparatus and a television receiver using the image processing apparatus, and more particularly to an image processing apparatus for converting an image data for current television with a screen aspect ratio of 4 to 3 into the image data with another aspect ratio of 16 to 9, for example, to be displayed on the full screen and a television receiver using the image processing apparatus.

### 2. Description of the prior art

The techniques for converting the image data to display the image data for current television on a full screen by a video display apparatus for wide television are generally known. When the image data for the video display apparatus with an aspect ratio of 4 to 3 (current television) is displayed on the full screen by the video display apparatus with an aspect ratio of 16 to 9 (wide television), a technique for enlarging the image data in a horizontal direction is well known. An image processing method of enlarging the image data in the horizontal direction generally involves making linear enlargement near the center of screen, and non-linear enlargement near both ends of screen.

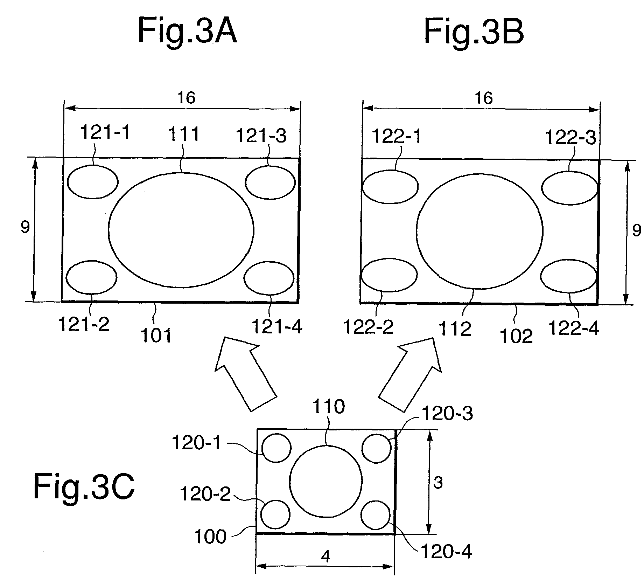

Referring to Figs. 3A to 3C, the enlargement of the image data in the horizontal direction will be described below.

Figs. 3A to 3C are views showing how the parts are extended in enlarging the image data in the horizontal direction. In Fig. 3C, a video 100 displayed by the video display apparatus for current television is composed of a circular video 110 near a center of screen and the circular videos 120-1 to 120-4 near both ends of screen.

When the circular video 110 near the center of screen and the circular videos 120-1 to 120-4 near both ends of screen are displayed on the full screen by the video display apparatus for wide television, a video 101 of Fig. 3A is obtained by making linear enlargement of the full screen.

And a video 102 of Fig. 3B is obtained by making linear enlargement near the center of screen, and non-linear enlargement near both ends of screen. Herein, a circular video 111 and a circular video 112 correspond to the circular video 110, and the circular videos 121-1 to 121-4 and the circular videos 122-1 to 122-4 correspond to the circular videos 120-1 to 120-4, respectively.

Since the video 101 is linearly enlarged as a whole, the circular video 111 near the center of screen is distorted, resulting in visually unsuitable screen, as shown in Fig. 3A.

However, in the video 102, the circular video near the center of screen is substantially circular, as shown in Fig. 3B. There is less feeling of disorder as compared with the video 110, as shown in Fig. 3C.

Accordingly, when the image data for current television is displayed on the full screen by the video display apparatus for wide television, it is desirable to change the enlargement ratio depending on the location near the center of screen or near both ends of screen. That is, in making the resampling in the horizontal direction, the enlargement ratio is required to be changed at each resampling point.

A conventional technique for an image enlarging circuit was disclosed in Japanese Patent Laid-Open No. 2000-148128. This conventional image enlarging circuit involves extending the sampled and input image data in the horizontal direction to make enlargement of the display screen in the horizontal direction.

And this image enlarging circuit comprises an image memory, a factor storing section, a non-linear enlargement ratio control section, and a filter. Herein, the image memory stores the input image data. The factor storing section stores beforehand the filter factors corresponding to a plurality of enlargement ratios.

The non-linear enlargement ratio control section outputs an enable signal for reading the corresponding image data from the image memory on the basis of an area width w set up to divide the display screen into n areas (n is an integer greater than 1) and an enlargement ratio set up corresponding to each of n areas. Also, it outputs a factor selection address for reading the corresponding filter factor from the factor storing section.

The filter makes the filtering for the image data read from the image memory on the basis of the filter factor read from the factor storing section, and outputs the image data non-linearly enlarged in the horizontal direction.

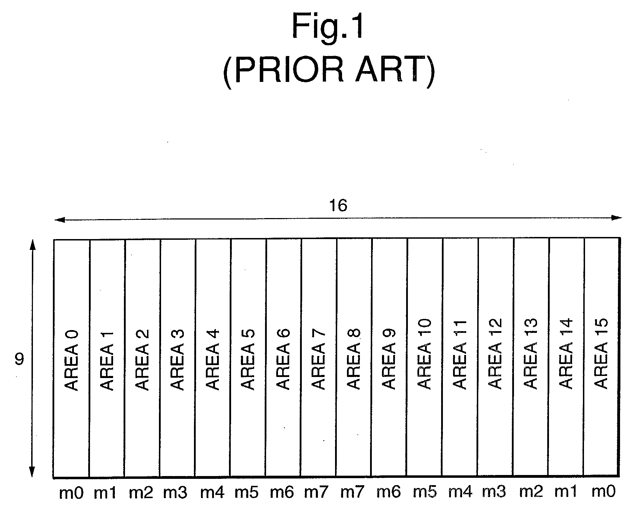

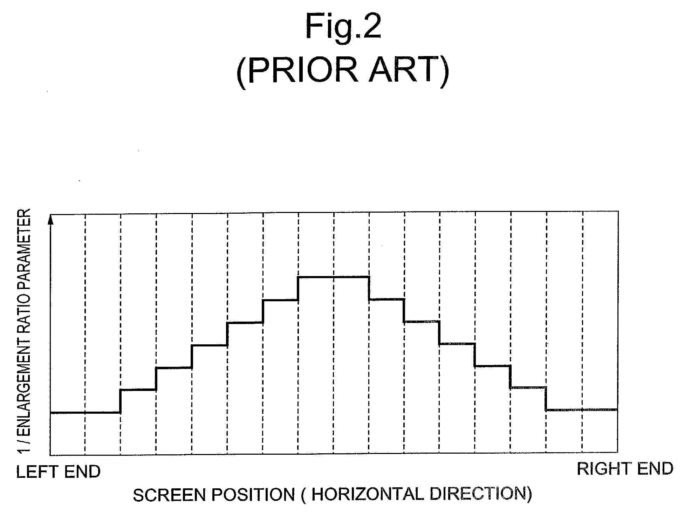

Referring to Figs. 1 and 2, the technique for the image enlarging circuit will be described below in more detail.

Fig. 1 is a view showing how the display screen with an aspect ratio of 16 to 9 is divided into the setting areas. The display screen is divided into n (16 in Fig. 1) areas with an area width w set up in the horizontal direction. An enlargement ratio parameter (m0 to m7 in Fig. 1) is set for each area.

And the resampling in the horizontal direction is made using the enlargement ratio parameter corresponding to each area. Eight parameters (m0 to m7) are prepared, and an area selection signal is switched by counting the resampling point and detecting the boundary of each area using a comparator. Herein, it is proposed that the resampling point is counted up in the areas 0 to 7 and counted down in the areas 8 to 15.

Fig. 2 is a graph showing one example of a relationship between the setting area and the enlargement ratio. The longitudinal axis represents the inverse of the enlargement ratio parameter indicating the enlargement ratio, and the transverse axis represents the horizontal position of screen. The enlargement ratio parameter with this method takes a different value for each area, as shown in Fig. 2. However, it has a constant value in each area.

Accordingly, the variation of the non-linear enlargement ratio parameter near both ends of screen is not suitable for drawing a smooth curve. Namely, the non-linear enlargement ratio parameter near both ends of screen varies stepwise, depending on the screen dividing number.

As a result, when the variation of the enlargement ratio parameter is great at the boundary where the enlargement ratio parameter varies stepwise, there is the possibility that an unnatural output image is produced for a source image. Moreover, if the screen dividing number n is increased to change the enlargement ratio parameter smoothly, the number of enlargement ratio parameters and the circuit scale of a multiplexer for selecting the enlargement ratio are increased.

In Japanese Patent Laid-Open No. 7-15661, a technique for an image enlargement compression circuit was disclosed. The image enlargement compression circuit of this technique processes an input video signal through an interpolation filter to produce a video signal of enlarged or compressed image. And the image enlargement compression circuit of this technique comprises first delay means, high frequency component extracting means, non-linear conversion means, first addition means, first multiplication means, second multiplication means, second addition means, third addition means and interpolation means.

Herein, the first delay means delays an input video signal for a predetermined time to output a first delayed video signal, and delays the first delayed video signal for a predetermined time to output a second delayed video signal.

The high frequency component extracting means extracts a first high frequency component that is a high frequency component of the first delayed video signal, and a second high frequency component that is a high frequency component of the second delayed video signal, employing the input video signal, the first delayed video signal and the second delayed video signal.

The non-linear conversion means converts the interpolation factor in accordance with the non-linear conversion characteristics by inputting successively the interpolation factor corresponding to the enlargement ratio or compression ratio in enlarging or compressing the image.

The first addition means inputs an offset amount, adds the offset amount to the factor output from the non-linear conversion means, and outputs a correction factor.

The first multiplication means multiplies the first high frequency component and the correction factor. The second multiplication means multiplies the second high frequency component and the correction factor. The second addition means adds an output signal from the first multiplication means to the first delayed video signal. The third addition means adds an output signal from the second multiplication means to the second delayed video signal.

The interpolation means inputs the interpolation factors successively, creates an interpolated pixel from an output signal from the second addition means and an output signal from the third addition means in accordance with the interpolation factor, and outputs a video signal of enlarged or compressed image.

With the above technique, it is possible to correct degradation in the frequency characteristics and emphasize the contour of image, when the image is enlarged or compressed through the interpolation filter process.

In enlarging the video source with an aspect ratio of 4 to 3 in the horizontal direction for the video display apparatus with an aspect ratio of 16 to 9, there is a need for a technique to make a continuous, more natural enlargement process on the entire display screen of the video display apparatus. Namely, there is a need for a technique with which the enlargement ratio is not discontinuous at the boundaries between the linear enlargement area and the non-linear enlargement area. And there is a need for the technique with which the user does not feel unnatural for the horizontal enlargement of the video display apparatus.

Also, the technique is required to make a more natural horizontal enlargement process without having effect on the circuit scale, and increasing the cost.

### SUMMARY OF THE INVENTION

It is an object of the present invention to provide an image processing apparatus and a television receiver using the image processing apparatus which can make a continuous, more natural enlargement process on the entire display screen of a video display apparatus in enlarging a video source with an aspect ratio of 4 to 3 in the horizontal direction for the video display apparatus with an aspect ratio of 16 to 9.

It is another object of the invention to provide an image processing apparatus and a television receiver using the image processing apparatus in which the enlargement ratio is not discontinuous at the boundaries between the linear enlargement area and the non-linear enlargement area in enlarging a video source with an aspect ratio of 4 to 3 in the horizontal direction for the video display apparatus with an aspect ratio of 16 to 9.

It is still another object of the invention to provide an image processing apparatus and a television receiver using the image processing apparatus which can make a more natural horizontal enlargement process without having effect on the circuit scale, and increasing the cost in enlarging a video source with an aspect ratio of 4 to 3 in the horizontal direction for the video display apparatus with an aspect ratio of 16 to 9.

It is another object of the invention to provide an image processing apparatus and a television receiver using the image processing apparatus with which the user does not feel unnatural for the horizontal enlargement of the video display apparatus in enlarging a video source with an aspect ratio of 4 to 3 in the horizontal direction for the video display apparatus with an aspect ratio of 16 to 9.

An image processing apparatus of the invention includes:
a storage section for storing a first image data as an image data for a display unit having a first aspect ratio as a predetermined aspect ratio;
an image operation section for providing a horizontal display position as a position in a horizontal direction at which the first image data is displayed on a display screen having a second aspect ratio different from the first aspect ratio, and a third enlargement ratio selected from a first enlargement ratio at which the first image data is enlarged non-linearly and a second enlargement ratio at which the first image data is enlarged linearly on the basis of the horizontal display position; and
an image output section for reading the first image data to be enlarged at the third enlargement ratio from the storage section, enlarging the first image data at the third enlargement ratio, and outputting the second image data as the image data to be displayable at the horizontal display position on the basis of the third enlargement ratio and the horizontal display position.

Moreover, the image processing apparatus of the invention can take various application forms as follows.

The image operation section of the image processing apparatus of the invention includes a function calculating section for calculating a delta value as the inverse of the third enlargement ratio, a position operation section for outputting the horizontal display position at the next time and the third enlargement ratio at the next time that is the inverse of the delta value at the next time on the basis of the delta value at the next time and the horizontal display position at the previous time, and an operation control section for outputting a reset signal to the function calculating section and the position operation section, when the horizontal display position at the next time reaches an end of the display screen, the function calculating section calculates the delta value at the next time, employing the delta value at the previous time and the numerical values obtained while calculating the delta value at the previous time, and resumes the calculation of the delta value on the basis of a first initial value as a preset initial value when the reset signal is input, and the position operation section resumes the output of the horizontal display position on the basis of a second initial value as a preset initial value when the reset signal is input.

Also, the operation control section of the image processing apparatus of the invention outputs an enable signal for enabling the function calculating section to calculate the delta value, and the function calculating section calculates the delta value only if the enable signal is input.

Also, the image operation section of the image processing apparatus of the invention has a preset upper limit enlargement ratio and sets the enlargement ratio of the first image data to the upper limit enlargement ratio, when the first enlargement ratio reaches the upper limit enlargement ratio.

Also, the image operation section of the image processing apparatus of the invention has a plurality of preset reference enlargement ratios, and can select any one of the plurality of reference enlargement ratios on the basis of the input of a selection signal from the outside.

Moreover, a television receiver using an image processing apparatus of the invention comprises the image processing apparatus having:
a storage section for storing the first image data as the image data for a display unit having a first aspect ratio as a predetermined aspect ratio;
a display screen having a second aspect ratio different from the first aspect ratio with a horizontal display position as a position in a horizontal direction to display the first image data;
an image operation section for outputting a third enlargement ratio selected from a first enlargement ratio at which the first image data is enlarged non-linearly and a second enlargement ratio at which the first image data is enlarged linearly on the basis of the horizontal display position; and
an image output section for reading the first image data to be enlarged at the third enlargement ratio from the storage section, enlarging it at the third enlargement ratio, and outputting the second image data as the image data to be displayable at the horizontal display position on the basis of the third enlargement ratio and the horizontal display position; and
a display unit for displaying the second image data on the display screen having the second aspect ratio;
wherein the image processing apparatus enlarges the first image data to be displayed near the center of the display screen at the second enlargement ratio and enlarges the first image data to be displayed near both ends of the display screen bisymmetrically at the first enlargement ratio.

Moreover, the television receiver using the image processing apparatus of the invention can take various suitable application forms as follows.

The television receiver using the image processing apparatus of the invention has the first enlargement ratio and the second enlargement ratio that are equal at the boundaries between near the center of screen and near both ends of screen.

The reference numerals and signs employed in the embodiments of the invention are indicated to clarify the correspondence between the claims and the embodiments of the invention. These reference numerals and signs are appended to clarify the correspondence between the claims and the embodiments of the invention. These reference numerals and signs must not be used to elucidate the technical range of the invention as defined in the claims.

An image processing apparatus of the invention includes a storage section (44), an image operation section (46), and an image output section (45). The storage section (44) stores the first image data (41) as the image data for a display unit having a first aspect ratio as a predetermined aspect ratio. The image operation section (46) provides a horizontal display position (DDA) as a position in a horizontal direction at which the first image data (41) is displayed on a display screen having a second aspect ratio different from the first aspect ratio, and a third enlargement ratio (1/delta1) selected from a first enlargement ratio (1/delta1: end) at which the first image data (41) is enlarged non-linearly and a second enlargement ratio (1/delta1: center) at which the first image data (41) is enlarged linearly on the basis of the horizontal 5 display position (DDA). The image output section (45) reads the first image data (41) to be enlarged at the third enlargement ratio (1/delta1) from the storage section (44), enlarging it at the third enlargement ratio (1/delta1), and outputting the second image data (43) as the image data to be displayable at the horizontal display position (DDA) on the basis of the third enlargement ratio (1/delta1) and the horizontal display position (DDA).

Moreover, the image operation section (46) of the image processing apparatus of the invention includes a function calculating section (1), a position operation section (2, 3, 4), and an operation control section (8). The function calculating section (1) calculates a delta value (delta1) as the inverse of the third enlargement ratio (1/delta1). The position operation section (2, 3, 4) outputs the horizontal display position at the next time (DDA: next time) and the third enlargement ratio at the next time (1/delta1: next time) that is the inverse of the delta value at the next time (delta1: next time) on the basis of the delta value at the next time (delta1: next time) and the horizontal display position at the previous time (DDA: previous time) . The operation control section (8) outputs a reset signal (R₀, R₁, R₂) to the function calculating section (1) and the position operation section (2, 3, 4), when the horizontal display position at the next time (DDA: next time) reaches an end of the display screen. However, the function calculating section (1) calculates the delta value at the next time (delta1: next time), employing the delta value at the previous time (delta1: previous time) and the numerical values (delta2, delta3) obtained while calculating the delta value at the previous time (delta1: previous time), and resumes the calculation of the delta value (delta1: next time) on the basis of a first initial value (delta1₀, delta2₀, delta3₀) as a preset initial value when the reset signal (R₁, R₂) is input. Also, the position operation section (2, 3, 4) resumes the output of the horizontal display position (DDA) on the basis of a second initial value (DDA₀) as a preset initial value when the reset signal (R₀) is input.

Moreover, the operation control section (8) of the image processing apparatus of the invention outputs an enable signal (WE) for enabling the function calculating section (1) to calculate the delta value (delta1). And the function calculating section (1) calculates the delta value (delta1) only if the enable signal (WE) is input.

Moreover, the image operation section (46) of the image processing apparatus of the invention has a preset upper limit enlargement ratio (1/D1), and sets the enlargement ratio of the first image data (41) to the upper limit enlargement ratio (1/D1), when the first enlargement ratio (1/delta1: end) reaches the upper limit enlargement ratio (1/D1).

Moreover, the image operation section (46) of the image processing apparatus of the invention has a preset reference horizontal display position, and sets the enlargement ratio of the first image data (41) to a preset reference enlargement ratio (1/C₀) when the horizontal display position (DDA) reaches the reference horizontal display position.

Moreover, the image operation section (46) of the image 5 processing apparatus of the invention has a plurality of preset reference enlargement ratios (1/C₁ to 1/Cₙ), and can select any one of the plurality of reference enlargement ratios (1/C₁ to 1/Cₙ) on the basis of the input of a selection signal (HDS) from the outside.

Also, a television receiver of the invention comprises an image processing apparatus (33) and a display unit (24). The image processing apparatus (33) is defined in any one of the above items. The display unit (24) comprises a display screen having a second aspect ratio for displaying the second image data (43) thereon. However, the image processing apparatus (33) enlarges the first image data (41) tobe displayed near the center (B) of screen of the display unit (24) at the second enlargement ratio (1/delta1: center) and enlarges the first image data (41) to be displayed near both ends ((A), (C)) of the display screen bisymmetrically at the first enlargement ratio (1/delta1: end) .

Also, the television receiver of the invention has the first enlargement ratio (1/delta1: end) and the second enlargement ratio (1/delta1: center) that are equal at the boundaries between near the center (B) of screen and near both ends ((A), (C)) of screen.

Also, the television receiver has the first enlargement ratio (1/delta1: end) that is a function of the position on the screen of the display unit (24) in the horizontal direction.

### BRIEF DESCRIPTION OF THE DRAWINGS

This above-mentioned and other objects, features and advantages of this invention will become more apparent by reference to the following detailed description of the invention taken in conjunction with the accompanying drawings, wherein:
Fig. 1 is a diagram of dividing a display screen with an aspect ratio of 16 to 9 into setting areas in the conventional example;
Fig. 2 is a graph showing a relationship between the setting area and an enlargement ratio in the conventional example;
Fig. 3A is a view of an enlarged portion showing how an image data is extended in a horizontal direction;
Fig. 3B is a view of another enlarged portion showing how the image data is extended in the horizontal direction;
Fig. 3C is a view of an original portion showing how the image data is extended in the horizontal direction;
Fig. 4 is a block diagram showing a configuration of an example of a DDA operation section in an image processing apparatus and a television receiver using the image processing apparatus according to the present invention;
Fig. 5 is a block diagram showing a configuration of an embodiment in the image processing apparatus and the television receiver using the image processing apparatus according to the present invention;
Fig. 6 is a block diagram showing a configuration of an image conversion section 33 as shown in Fig. 5;
Fig. 7 is a block diagram showing a configuration of a function operation section 1 as shown in Fig. 4;
Fig. 8 is a flowchart showing an operation flow of an embodiment in the image processing apparatus and the television receiver using the image processing apparatus according to the present invention;
Fig. 9 is a diagram showing a configuration of a second embodiment of the DDA operation section 46 as shown in Fig. 6;
Fig. 10 is a diagram showing a configuration of a third embodiment of the DDA operation section 46 as shown in Fig. 6;
Fig. 11 is a diagram showing a configuration of a fourth embodiment of the DDA operation section 46 as shown in Fig. 6;
Fig. 12 is a diagram showing a configuration of a fifth embodiment of the DDA operation section 46 as shown in Fig. 6;
Fig. 13 is a graph showing a relationship between the delta1 value and the horizontal position of a video display apparatus in the embodiment of the image processing apparatus and the television receiver according to the present invention; and
Fig. 14 is another graph showing a relationship between the delta1 value and the horizontal position of the video display apparatus in the embodiment of the image processing apparatus and the television receiver according to the present invention.

### DETAILED DESCRIPTION OF THE PREFERRED EMBODIMENTS

An image processing apparatus and a television receiver using the image processing apparatus according to the present invention have a feature of making a continuous, more natural enlargement process, using a quadratic curve operation circuit in a portion for calculating an enlargement ratio parameter value (delta increment value of DDA) in making enlargement of an image in a horizontal direction to display a video source for current television with an aspect ratio of 4 to 3 on the full screen by a video display apparatus for wide television with an aspect ratio of 16 to 9.

The image processing apparatus and the television receiver using the image processing apparatus according to the invention will be described below by way of the embodiment with reference to the accompanying drawings.

The preferred embodiments for the image processing apparatus and method of converting the image data for current television having a screen aspect ratio of 4 to 3 into the image data with an aspect ratio of 16 to 9, and the television receiver using the image processing apparatus will be described below, although the invention is also applicable to a video display apparatus required to convert other image data.

In these embodiments, the same or like parts are designated by the same reference numerals.

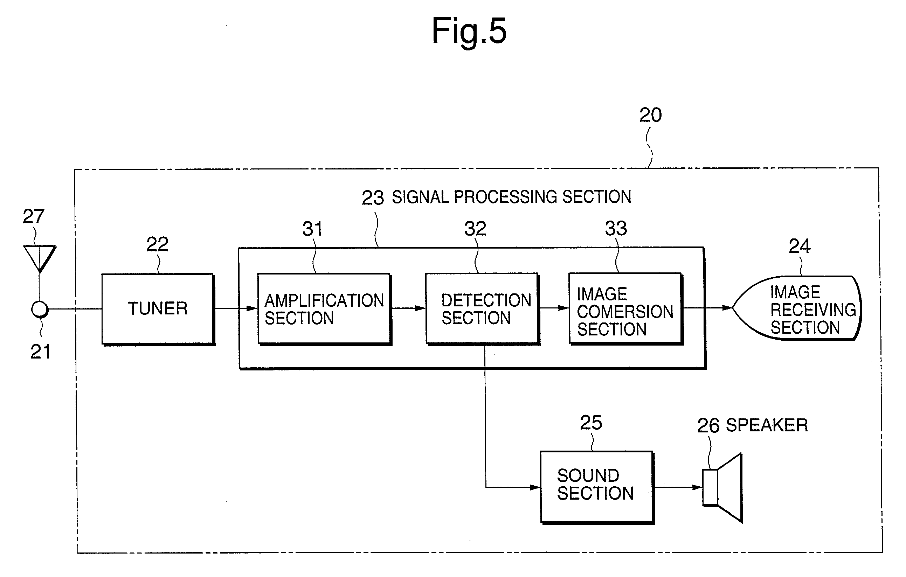

Fig. 5 is a block diagram showing the configuration of the image processing apparatus and the television receiver using the image processing apparatus according to a first embodiment of the invention.

A television receiver 20 according to the first embodiment of the invention comprises an antenna terminal 21, a tuner 22, a signal processing section 23 having an amplification section 31, a detection section 32 and an image conversion section 33, an image receiving section 24, a sound section 25 and a speaker 26.

The antenna terminal 21 is an input terminal for connecting a cable to enter an electric wave (containing the image data for current television having a screen aspect ratio of 4 to 3 here) received at a reception antenna 27 into the television receiver 20. The received electric wave is entered into the tuner 22 via the antenna terminal 21.

The tuner 22 makes the amplification, frequency conversion, and channel selection for received electric wave and outputs the intermediate frequency data.

In the signal processing section 23, the amplification section 31 amplifies the intermediate frequency data for each of the image and the sound. Then, its data is detected by the detection section 32, in which the image data is output to the image conversion section 33 and the sound intermediate frequency data is output to the sound section 25. The image conversion section 33 as an image processing apparatus enlarges the image data in the horizontal direction (for the image receiving section 24), employing an appropriate conversion method (hereinafter described), and out puts the converted image data, to display the image data for current television having a screen aspect ratio of 4 to 3 on the full screen by the video display apparatus for wide television with an aspect ratio of 16 to 9.

The image receiving section 24 as a display unit is a video display apparatus for wide television, and has a display screen with an aspect ratio of 16 to 9. The converted image data is displayed on the screen of an electron tube, a plasma display panel, a liquid crystal display panel, or an organic EL display panel.

The sound section 25 demodulates the sound intermediate data and outputs the sound data. The speaker 26 reproduces the sound on the basis of the sound data.

The image conversion section 33 as the image processing apparatus will be further described below.

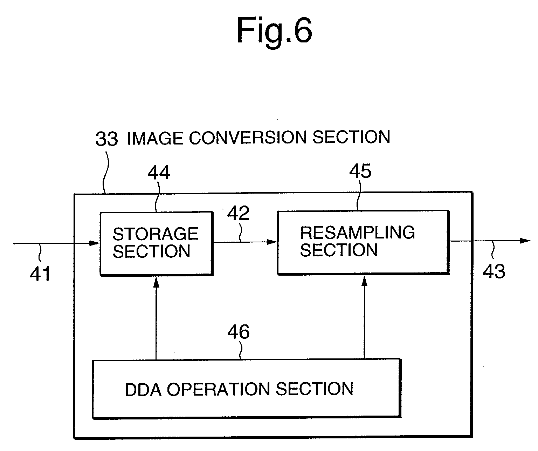

Fig. 6 is a block diagram showing a configuration of the image conversion section 33 as shown in Fig. 5. The image conversion section 33 comprises a storage section 44, a resampling section 45 and a DDA operation section 46.

The storage section 44 stores and outputs the image data 41 output from the detection section 32 by the FIFO (First-in First-out) operation.

The DDA operation section 46 as an image operation section calculates an enlargement ratio parameter and the DDA (hereinafter described) in the horizontal direction (for the image receiving section 24), employing an appropriate conversion method (hereinafter described), and outputs them to the resampling section 45, to display the image data for current television having a screen aspect ratio of 4 to 3 on the full screen by the video display apparatus for wide television with an aspect ratio of 16 to 9.

The resampling section 45 as an image output section reads the image data 42 of the storage section 44 (or the image data 41 stored in the storage section 44) and calculates the enlargement ratio parameter on the basis of the (present) DDA (position of the video display apparatus in the horizontal direction, or distance from the left end of the display screen in this embodiment) output from the DDA operation section 46.

And the image data between the previous DDA and the present DDA is enlarged in the horizontal direction on the basis of the enlargement ratio parameter and output as the converted image data 43.

The DDA operation section 46 will be further described below.

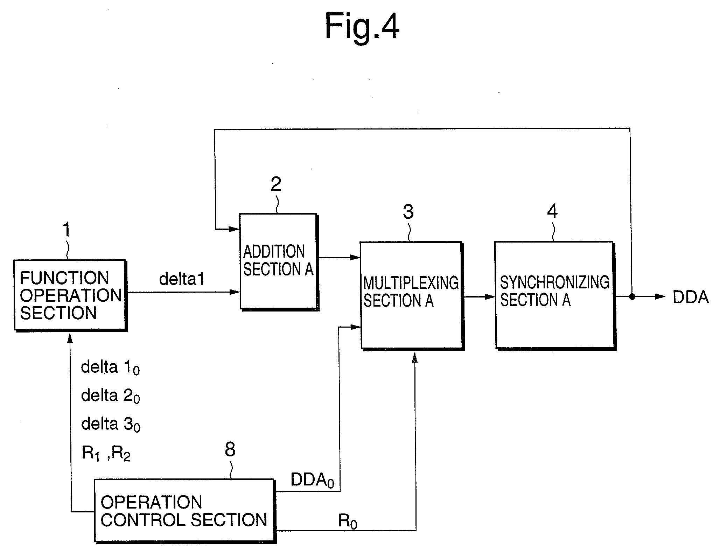

Fig. 4 is a block diagram showing a configuration of the DDA operation section 46 as shown in Fig. 6. The DDA operation section 46 comprises a function operation section 1, an addition section A(2), a multiplexing section A(3), a synchronizing section A(4), and an operation control section 8. Here, the addition section A(2), the multiplexing section A(3) and the synchronizing section A(4) make up the position operation section.

The function operation section 1 outputs a variable delta1 (=1/enlargement ratio parameter (indicating the enlargement ratio)) to the addition section A(2).

The addition section A(2) adds the previous DDA (Digital Differential Amplitude) and delta1 and outputs the sum as the DDA to the multiplexing section A(3).

The multiplexing sectionA(3) has a reset signal DDA₀ input at the time when the image data is newly scanned from an end in the horizontal direction. And it outputs DDA₀ that is the initial value of newly input DDA, as the DDA, on the basis of the reset signal. At other times, the output from the addition section A(2) is directly output as the DDA. The multiplexing section A(3) is exemplified by a multiplexer.

The synchronizing sectionA(4) holds an output signal (DDA) from the multiplexing section A(3), and outputs it as the DDA to the resampling section 45 and the addition section A(2) in accordance with a clock signal. The synchronizing section A(4) is exemplified by a DFF (D Flip-Flop).

The operation control section 8 controls the operation of the DDA operation section 46. Also, it makes the resetting and counting of a counter (count) indicating the resampling point position (addition number), the output of reset signals R₀, R₁ and R₂, the setting and output of initial values (DDA₀, delta3₀, delta2₀, delta1₀), and the setting of the non-linear interrupt position (P₁: point1, hereinafter described) and the non-linear restart position (P₂: point2, hereinafter described). However, the operation control section 8 may be contained in another control section (not shown) for controlling the television receiver 20. Alternatively, the operation control section 8 may make various other controls for the television receiver 20.

The function operation section 1 will be further described below.

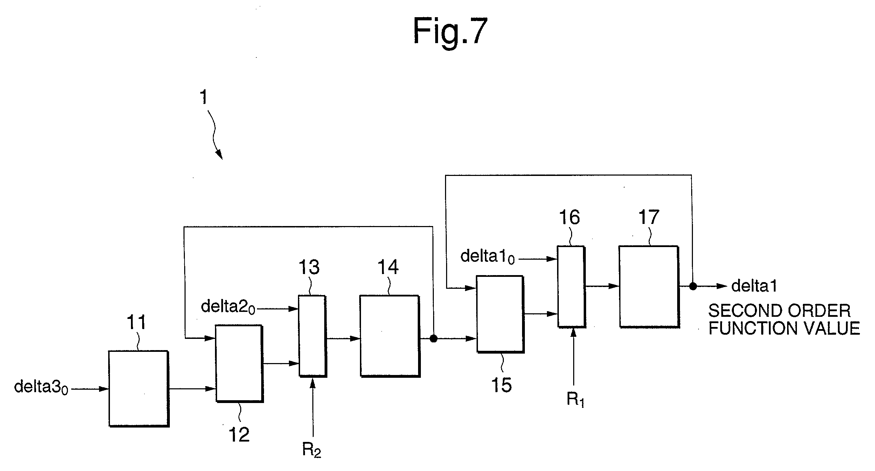

Fig. 7 is a block diagram showing a configuration of the function operation section 1 as shown in Fig. 4. The function operation section 1 comprises a synchronizing section D(11), an addition section B(12), a multiplexing section B(13), a synchronizing section B(14), an addition section C(15), a multiplexing section C(16) and a synchronizing section C(17).

The synchronizing section D(11) has an initial value delta3₀ of variable delta₃ input and stored internally. And it outputs delta3ₒ as delta₃ to the addition section B(12) in accordance with a clock signal. The synchronizing section D(11) is exemplified by a DFF.

The addition section B (12) adds the previous output delta2 of the synchronizing section B(14) and delta3 and outputs the sum as delta2 to the multiplexing section B(13).

The multiplexing section B(13) has a reset signal R₂ input at the time when the image data is newly scanned from an end in the horizontal direction. And it outputs the initial value delta2₀ of newly input variable delta2, as delta2, on the basis of the reset signal. At other times, the output from the addition section B(12) is directly output as delta2. The multiplexing section B(13) is exemplified by a multiplexer.

The synchronizing section B(14) holds an output signal from the multiplexing section B(13), and outputs it as delta2 to the addition section B(12) and the addition section C(15) in accordance with a clock signal. The synchronizing section B(14) is exemplified by a DFF.

The addition section C(15) adds the previous output delta1 of the synchronizing section C(17) and the output delta2 of the synchronizing section B(14) and outputs the sum to the multiplexing section C(16).

The multiplexing section C(16) has a reset signal R₁ input at the time when the image data is newly scanned from an end in the horizontal direction. And it outputs the initial value delta1₀ of newly input variable delta1, as delta1, on the basis of the reset signal. At other times, the output from the addition section C(15) is directly output as delta1. The multiplexing section C(16) is exemplified by a multiplexer.

The synchronizing section C(17) holds an output signal from the multiplexing section C(16), and outputs it as delta1 to the addition section C(15) and the addition section A(2) in accordance with a clock signal. The synchronizing section C(17) is exemplified by a DFF.

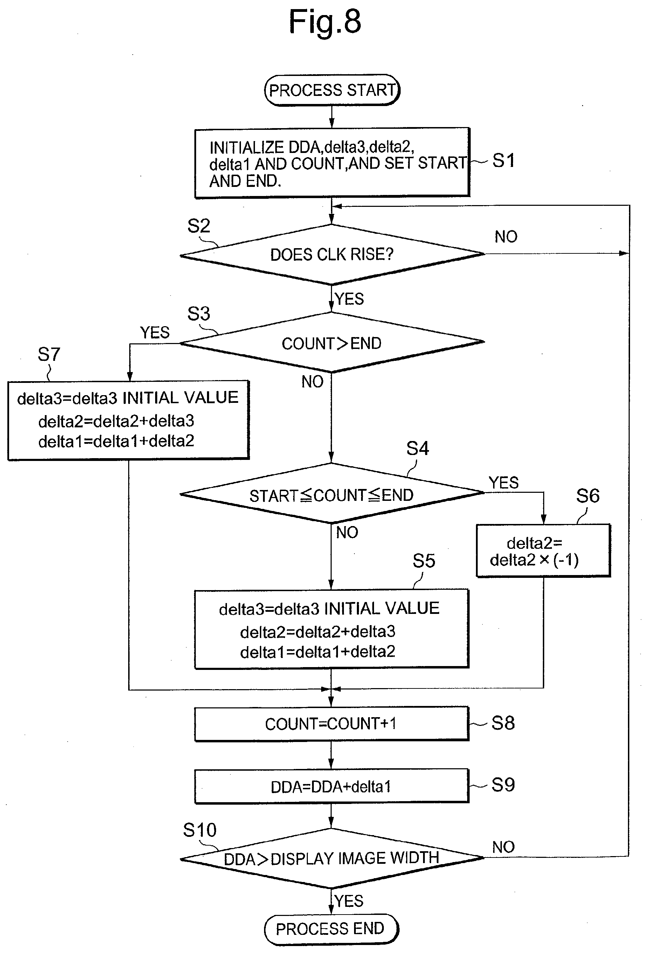

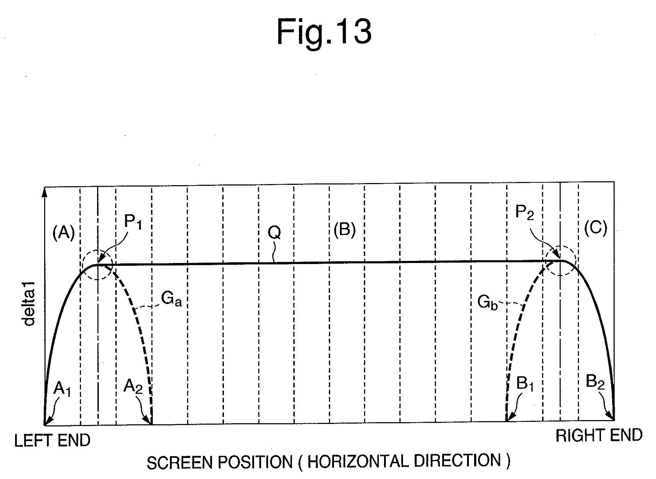

The operation of the image processing apparatus and the television receiver according to the embodiment of the invention will be described below with reference to the block diagrams of Figs. 4 to 7, the flowchart of Fig. 8, and the graph for delta1 of Fig. 13.

Fig. 13 is a graph showing the relationship between delta1 (= delta=1/enlargement ratio parameter) and the position of the video display apparatus in the embodiment of the image processing apparatus and the television receiver according to the invention. The transverse axis indicates the position of the video display apparatus (image receiving section 24) in the horizontal direction, in which the left end is the left end of the video display apparatus and the right end is the right end of the video display apparatus. The longitudinal axis indicates delta1. Herein, the resampling point is moved from left to right on the screen (in this embodiment).

A curve Ga is a quadratic curve passing from A1 to P1 to A2, a line segment Q is a line (delta1 constant) connecting two points, a left end P1 and a right end P2, and a curve Gb is a quadratic curve passing from B1 to P2 to B2. The curves Ga and Gb make contact with the line segment Q at points P1 and P2, respectively. The delta1 is increased on the curve Ga from the left end A1, kept at a constant value (on the line segment Q) from point P1 to point P2, and decreased on the curve Gb from point P2 to the right end B2.

Referring to Figs. 5 and 6, the image processing method, prior to the image conversion section 33 for the image data, will be described below.
(1) An electric wave carrying the broadcast data (containing the image data for current television having a screen aspect ratio of 4 to 3 here) is received at the reception antenna 27, and entered into the tuner 22 via the antenna terminal 21. The received electric wave is amplified by the tuner 22, with frequency conversion and channel selection, and made the intermediate frequency data.
(2) The intermediate frequency data is amplified for each of image and sound in the amplification section 31. Then, the data is detected in the detection section 32 to have the image data 41 representing the image and the intermediate frequency data of sound.
(3) The intermediate frequency data of sound is converted into the sound data representing the sound in the sound section 25. The sound data is reproduced as the sound in the speaker 26.
(4) The image data 41 is stored in the storage section 44 of the image conversion section 33.
   Referring to Figs. 4, 6, 7 and 8, the processing of the image conversion section 33 will be described below.
   Fig. 8 is a flowchart showing the operation of the DDA operation section 46 of the image conversion section 33 in the example of the image processing apparatus and the television receiver according to the invention.
(5) step S1: The initial values are set up by the operation control section 8. The necessary settings are (a) to (d) as follows.
   (a) Setting the initial values (delta3₀, delta2₀, delta1₀) of delta3, delta2 and delta1 in the function operation section.
   (b) Setting the initial value (DDA₀) of DDA in the multiplexing section A(3).
   (c) Setting the non-linear interrupt position (P₁) and the non-linear restart position (P₂) indicating the boundaries of a left end area of screen (Fig. 13: a non-linear enlarged portion A with left end A₁ and right end P₁ (point1) of the screen in the horizontal direction), a central area of screen (Fig. 13: a linear enlarged portion B with left end P₁ and right end P₂ (point2) of the screen in the horizontal direction), and a right end area of screen (Fig. 13: a non-linear enlarged portion C with left end P₂ and right end B₂ of the screen in the horizontal direction) and calculating the count number (start at P₁ and end at P₂) at each position, in the operation control section 8.
   (d) Resetting the counter (count) indicating the resampling point position (addition number) in the operation control section 8.
(6) Step S2: The operation control section 8 monitors whether or not the clock signal is rising. When the clock signal is rising, the procedure goes to step S3.
(7) Step S3: DDA is added in synchronism with the clock signal. At this time, the function operation section 1 operates differently depending on the value of count. If the count value is less than or equal to the non-linear restart position (end), the procedure goes to step S4. If it is greater than the non-linear restart position (end in Fig. 8), the procedure goes to step S7.
(8) Step S4: If the count value is greater than or equal to the non-linear interrupt position (start), the procedure goes to step S6. If the count value is less than the non-linear interrupt position (start), the procedure goes to step S5.
(9) Step S5: If the count value is less than the non-linear interrupt position (start), i.e., count<start, the operation control section 8 controls the output operation of the synchronizing section D(11), the synchronizing section B(14) and the synchronizing section C(17), such that:
   delta3 = delta3₀ (initial value, output from the synchronizing section D(11)),
   delta2 = delta2+delta3 (output from the synchronizing section B(14) via the addition section B(12) and the multiplexing section B(13), delta2 = delta2₀ when count=0), and
   delta1 = delta1+delta2 (output from the synchronizing section C(17) via the addition section C(15) and the multiplexing section C(16), delta1 = delta1₀ when count=0). And the function operation section 1 outputs the calculated delta1 to the addition section A(2).
(10) Step S6: If the count value is greater than or equal to the non-linear interrupt position (start), and less than or equal to the non-linear restart position (end in Fig. 8), namely, start ≤ count ≤ end, the operation control section 8 stops the output operation of the synchronizing section D(11) and the synchronizing section B(14). And
   delta2 = delta2 x (-1) (converting delta2 stored in the synchronizing section B(14) into the negative value). Also, the synchronizing section C(17) is controlled to output
   delta1=delta1 (delta1 stored in the synchronizing section C(17)). And the function operation section 1 outputs the delta1 to the addition section A(2) without change.
(11) Step S7: If the count value is greater than the non-linear restart position (end), namely, end < count, the operation control section 8 controls the output operation of the synchronizing section D(11), the synchronizing section B(14) and the synchronizing section C(17), such that:
   delta3 = delta3₀ (initial value, output from the synchronizing section D(11)),
   delta2 = delta2+delta3 (output from the synchronizing section B(14) via the addition section B(12) and the multiplexing section B(13), delta2 is negative value at step S6), and
   delta1 = delta1+delta2 (output from the synchronizing section C(17) via the addition section C(15) and the
   multiplexing section C(16)). And the function operation section 1 outputs the calculated delta1 to the addition section A(2).
(12) Step S8: The operation control section 8 increments the counter such that count=count+1.
(13) Step S9: DDA = DDA+delta1 in the addition section A(2).
   The value of the second order function operation result delta1 generated in the above way is added as delta (increment) of DDA. And DDA is output from the synchronizing section A(4) to the resampling section 45 on the basis of an increase (clock signal) in the count. At this time, delta1 is output at the same time. The enlargement ratio parameter indicating the enlargement ratio of the image data is obtained as the inverse of delta1.
(14) Step S10: The operation control section 8 ends the processing of one frame (one screen) if the DDA value reaches the display screen width (right end in Fig. 13), and the procedure returns to step S2.
   The relationship between the initial values (delta3₀, delta2₀, delta1₀) of delta3, delta2 and delta1 and the second order function y=ax²+bx+c can be obtained from the expressions delta1₀=c, delta2₀=a+b, and delta3₀=2a. Then, y=ax²+bx+c is the curve Gₐ and curve G_{b}, as shown in Fig. 13.
(15) In Figs. 5 and 6, the resampling section 45 reads the image data 42 (or the image data 41 stored in the storage section 44) of the storage section 44 on the basis of the DDA output from the DDA operation section 46, enlarges the image data 42 by an enlargement ratio parameter (=1/delta1) in the horizontal direction, and outputs the converted image data 43 that is the image data between the previous DDA and the present DDA.
(16) The image receiving section 24 displays on the screen the converted image data 43 that is the image data between the previous DDA and the present DDA enlarged by an enlargement ratio parameter (=1/delta1) in the horizontal direction so that the image data 41 for current television having a screen aspect ratio of 4 to 3 may be displayed on the full screen by the video display apparatus for wide television with an aspect ratio of 16 to 9.

Referring to Fig. 13, a variation of delta1 as a result of the above operation will be described below.

In Fig. 13, the delta (=delta1) value is increased from the left end of display screen to the resampling point 1 (P₁) in accordance with the second order function. The delta value has no increment from P₁ to the resampling point 2 (P₂). Accordingly, the linear DDA calculation is made in this interval.

If P₂ is reached, the delta value varied from the left end to P₁ is returned in a negative direction of the time axis. Namely, the variation of delta value from the left end to P₁ is laterally symmetrical with the variation of delta value from P₂ to the right end. In this manner, the image enlargement processing is made at an enlargement ratio parameter (1/delta1: end) as the first enlargement ratio with the quadratic (non-linear) curve in both end regions of the screen. The image enlargement processing is made at an enlargement ratio parameter (1/delta1: center, constant value) as the second enlargement ratio with the linear function near the center of the screen.

And the non-linear and linear functions are continuous at a slope 0 in the transit region. Accordingly, there is no abrupt increase or decrease in the enlargement ratio, resulting in the effect that the more natural enlargement processing is made for the original source video.

The variation of delta value (Fig. 13) in this invention is continuous to enable the more natural enlargement processing, as compared with the variation of delta value regarding the conventional example (Fig. 2: Japanese Patent Laid-Open No. 2000-148128).

Though the circuit scale is increased owing to a number enlargement ratio parameters in the conventional example (Fig. 2: Japanese Patent Laid-Open No. 2000-148128), it does not depend on the enlargement ratio parameters in this invention. For example, in making the non-linear scaling where the display screen width is 720 pixels (NTSC) and the enlargement ratio parameter is 19 bits, the circuit is about 20 Kgrid (6 Kgate) with a multiplexer of 360 Words×19 bits F/F or RAM+360 tol because 360 (720/2) parameters are returned in the conventional example, whereas it is about 3 Kgrid (1 Kgate) with a second order function operation circuit plus a multiplexer in this invention.

5 The positions P₁ and P₂ and the enlargement ratio parameters can be changed to desired values owing to variations (=delta1₀ to delta3₀) of the values a, b and c in the second order function.

Besides the second order function, other functions having the point at which differential coefficient becomes zero may be employed to eliminate abrupt increase or decrease in the enlargement ratio, whereby the more natural enlargement processing can be made for the original source image. In this case, it is preferable to have an upper convex function in the intervals fromA1 to P₁ and from P₂ to B₂. This convex function tends to have a constant variation in the enlargement ratio to be visually natural.

An image processing apparatus according to a second embodiment of the invention will be described below. This image processing apparatus has the same fundamental configuration as above, except that the processing algorithm of the image data in the DDA operation section 46 of Fig. 4 is changed.

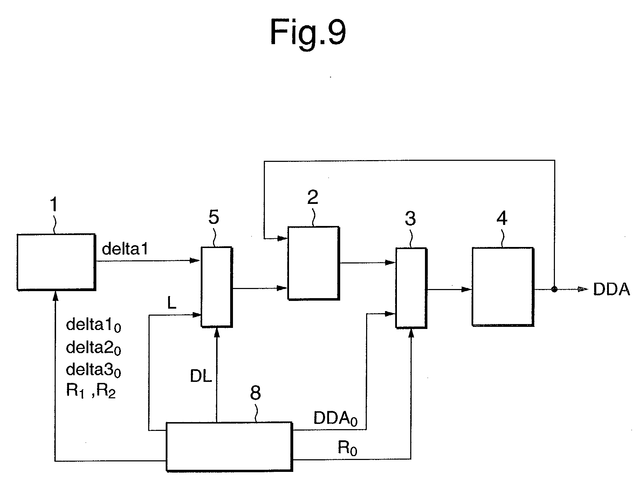

Fig. 9 is a diagram showing another configuration of the DDA operation section 46 as shown in Fig. 6. The DDA operation section 46 of the image processing apparatus according to the second embodiment of the invention comprises the function operation section 1, the addition section A(2), the multiplexing section A(3), the synchronizing section A(4), the multiplexing section D (5) and the operation control section 8. The function operation section 1, the addition section A(2), the multiplexing section A(3), and the synchronizing section A(4) are the same as described previously, and not described here.

The multiplexing section D(5) makes a comparison between the second order function value deltal calculated in the function operation section 1 and an L signal indicating D1 that is a preset limit value, if a DL signal (delta value limit signal) is input from the operation control section 8. And if delta1 is greater than or equal to D₁, D₁, but not delta1, is output to the addition section A(2).

The operation control section 8 outputs the DL signal and the L signal to the multiplexing section D(5) in accordance with an outside instruction or processing algorithm, besides the already described functions.

The operation of the above configuration is the same as described previously, except for the additional function of the multiplexing section D(5), and is not described here.

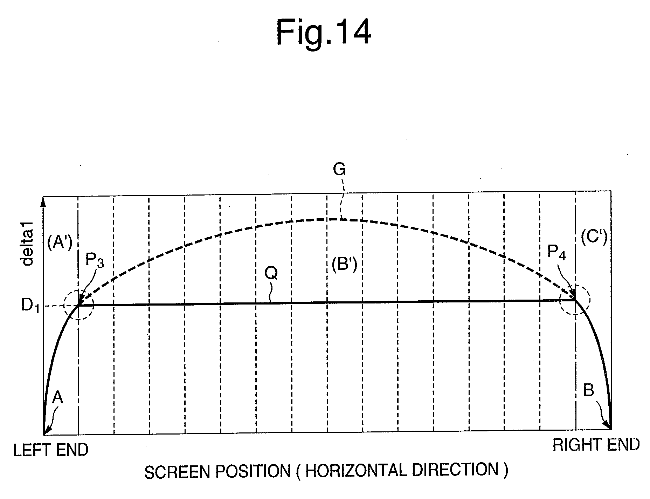

Fig. 14 is a graph showing the relationship between the delta1 value and the screen position in the video display apparatus. The transverse axis represents the screen position (horizontal direction) in the video display apparatus, and the longitudinal axis represents the delta1 (=1/enlargement ratio parameter) . Thereby, the image is linearly enlarged from the time (P₃) when the enlargement ratio parameter (1/delta1) reaches a preset limit value (=1/D₁). Namely, the range of enlargement ratio parameter for linear enlargement can be the preset range.

In this case, it is possible to control the size of each of the non-linear enlargement area (A') at the left end of screen, the linear enlargement area (B') in the center of screen, and the non-linear enlargement area (C'), at the right end of screen and the enlargement ratio of each area by changing the value of D₁.

An image processing apparatus according to a third embodiment of the invention will be described below. This image processing apparatus has the same fundamental configuration as above, except that the processing algorithm of the image data in the DDA operation section 46 of Fig. 4 is further changed.

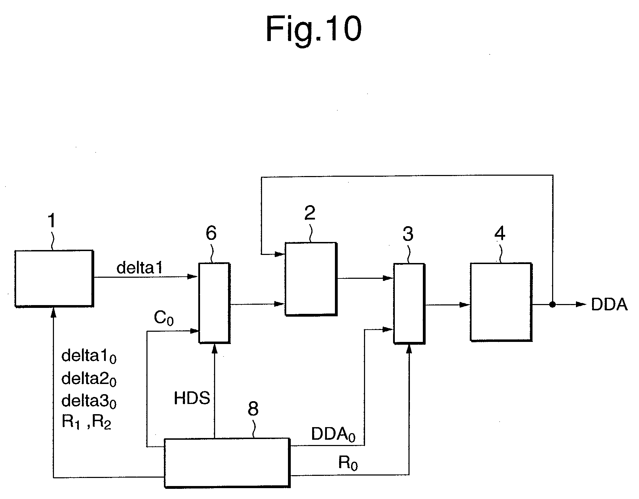

Fig. 10 is a diagram showing still another configuration of the DDA operation section 46 as shown in Fig. 6. The DDA operation section 46 of the image processing apparatus according to the third embodiment of the invention comprises the function operation section 1, the addition section A(2), the multiplexing section A(3), the synchronizing section A(4), the multiplexing section E(6) and the operation control section 8. The function operation section 1, the addition section A(2), the multiplexing section A(3), and the synchronizing section A(4) are the same as described previously, and not described here.

The multiplexing section E(6) makes a comparison between the second order function value delta1 calculated in the function operation section 1 and a C₀ signal indicating a constant value (C₀ value), if a horizontal position signal (HDS signal, a plurality of signals settable) indicating a preset horizontal position of resampling point is input from the operation control section 8. And if delta1 is greater than or equal to C₀ value, C₀ value, but not delta1, is output to the addition section A(2).

The operation control section 8 outputs the HDS signal and the C₀ signal to the multiplexing section E (6) in accordance with an outside instruction or processing algorithm, besides the already described functions. The enlargement ratio parameter-as the enlargement ratio in this case is 1/C₀.

The operation of the above configuration is the same as described previously, except for the additional function of the multiplexing section E(6), and is not described here.

With the above configuration, it is possible to set up the range for linear enlargement at a preset horizontal position on the display screen.

Referring to Fig. 13 or 14, it is possible to control the size of each of the non-linear enlargement area (A, A') at the left end of screen, the linear enlargement area (B, B') in the center of screen, and the non-linear enlargement area (C, C') at the right end of screen and the enlargement ratio of each area by deciding the horizontal positions of P₁ and P₂ or P₃ and P₄.

An image processing apparatus according to a fourth embodiment of the invention will be described below. This image processing apparatus has the same fundamental configuration as above, except that the processing algorithm of the image data in the DDA operation section 46 of Fig. 4 is further changed.

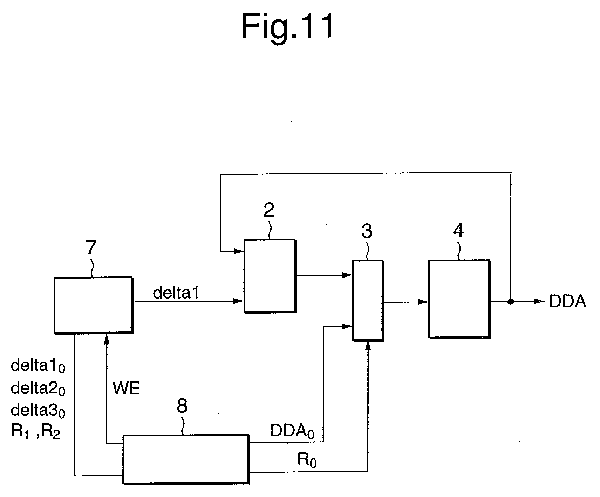

Fig. 11 is a diagram showing still another configuration of the DDA operation section 46 as shown in Fig. 6. The DDA operation section 46 of the image processing apparatus according to the fourth embodiment of the invention comprises the function operation section 1, the addition section A(2), the multiplexing section A(3), the synchronizing section A(4) and the operation control section 8. The function operation section 1, the addition section A (2), the multiplexing section A(3), and the synchronizing section A(4) are the same as described previously, and not described here.

The operation control section 8 outputs a write enable signal (WE) to the function operation section 1 in accordance with an outside instruction or processing algorithm, besides the already described functions. And if the second order function operation is interrupted, WE is made equal to zero.

The operation of the above configuration is the same as described previously, except for the additional function of the multiplexing section E(6), and is not described here.

Thereby, the delta value can be changed stepwise at will. Also, it is possible to handle the under flow of the image data in making a series of image processings.

An image processing apparatus according to a fifth embodiment of the invention will be described below. This image processing apparatus has the same fundamental configuration as above, except that the processing algorithm of the image data in the DDA operation section 46 of Fig. 4 is further changed.

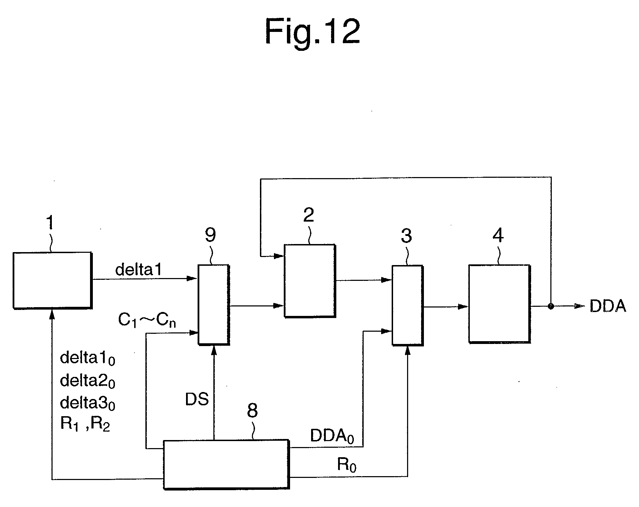

Fig. 12 is a diagram showing still another configuration of the DDA operation section 46 as shown in Fig. 6. The DDA operation section 46 of the image processing apparatus according to the fifth embodiment of the invention comprises the function operation section 1, the addition section A(2), the multiplexing section A(3), the synchronizing section A(4), the multiplexing section F(7) and the operation control section 8. The function operation section 1, the addition sectionA(2), the multiplexing section A(3), and the synchronizing section A(4) are the same as described previously, and not described here.

The multiplexing section F(7) outputs a selected signal (any one of the signals indicating C₁ to Cₙ and delta1) to the addition section A(2), in accordance with a DS signal, if the DS signal that is a signal for selecting one of a plurality of preset data values (C₁ to Cₙ) and the second order function value delta1 calculated in the function operation section 1 is input from the operation control section 8.

The operation control section 8 outputs the DS signal for selecting any one of C₁ to Cₙ and the signals indicating C₁ to Cₙ to the multiplexing section F(7) in accordance with an outside instruction or processing algorithm, besides the already described functions. The enlargement ratio parameter as the enlargement ratio in this case is any (selected) one of 1/C₁ to 1/Cₙ.

The operation of the above configuration is the same as described previously, except for the additional function of the multiplexing section F(7), and is not described here.

Various image processing methods may be implemented by adding the second order function value to the delta value and adding the choices of plural fixed values.

As described above, with this invention, it is possible to enlarge a video source with an aspect ratio of 4 to 3 in the horizontal direction for the video display apparatus with an aspect ratio of 16 to 9 without being discontinuous in the enlargement ratio at the boundaries between the linear enlargement area and the non-linear enlargement area, and at the low cost.

## Claims

1. An image processing apparatus comprising:
a storage section for storing a first image data as an image data for a display unit having a first aspect ratio as a predetermined aspect ratio;
an image operation section for providing a horizontal display position as a position in a horizontal direction at which said first image data is displayed on a display screen having a second aspect ratio different from said first aspect ratio, and a third enlargement ratio selected from a first enlargement ratio at which said first image data is enlarged non-linearly and a second enlargement ratio at which said first image data is enlarged linearly on the basis of said horizontal display position; and
an image output section for reading said first image data to be enlarged at said third enlargement ratio from said storage section, enlarging said first image data at said third enlargement ratio, and outputting the second image data as the image data to be displayable at said horizontal display position on the basis of said third enlargement ratio and said horizontal display position.

2. The image processing apparatus according to claim 1,
wherein said image operation section comprises:
a function calculating section for calculating a delta value as the inverse of said third enlargement ratio;
a position operation section for outputting said horizontal display position at the next time and said third enlargement ratio at the next time that is the inverse of said delta value at the next time on the basis of said delta value at the next time and said horizontal display position at the previous time; and
an operation control section for outputting a reset signal to said function calculating section and said position operation section, when said horizontal display position at the next time reaches an end of said display screen, and
said function calculating section calculates said delta value at the next time, employing said delta value at the previous time and the numerical values obtained while calculating said delta value at the previous time, and resumes the calculation of said delta value on the basis of a first initial value as a preset initial value when said reset signal is input, and said position operation section resumes the output of said horizontal display position on the basis of a second initial value as a preset initial value when said reset signal is input.

3. The image processing apparatus according to claim 2,
wherein said operation control section outputs an enable signal for enabling said function calculating section to calculate said delta value, and said function calculating section calculates said delta value only if said enable signal is input.

4. The image processing apparatus according to claim 1, 2 or 3,
wherein said image operation section has a preset upper limit enlargement ratio and sets the enlargement ratio of said first image data to said upper limit enlargement ratio, when said first enlargement ratio reaches said upper limit enlargement ratio.

5. The image processing apparatus according to claim 1, 2, 3 or 4,
wherein said image operation section has a preset reference horizontal display position, and sets the enlargement ratio of said first image data to a preset reference enlargement ratio when said horizontal display position reaches said reference horizontal display position.

6. The image processing apparatus according to claim 1, 2, 3, 4 or 5
wherein said image operation section has a plurality of preset reference enlargement ratios, and can select any one of said plurality of reference enlargement ratios on the basis of the input of a selection signal from the outside.

7. A television receiver comprising:
an image processing apparatus having:
a storage section for storing the first image data as the image data for a display unit having a first aspect ratio as a predetermined aspect ratio;
a display screen having a second aspect ratio different from said first aspect ratio with a horizontal display position as a position in a horizontal direction to display said first image data;
an image operation section for outputting a third enlargement ratio selected from a first enlargement ratio at which said first image data is enlarged non-linearly and a second enlargement ratio at which said first image data is enlarged linearly on the basis of said horizontal display position; and
an image output section for reading said first image data to be enlarged at said third enlargement ratio from said storage section, enlarging it at said third enlargement ratio, and outputting the second image data as the image data to be displayable at said horizontal display position on the basis of said third enlargement ratio and said horizontal display position; and
a display unit for displaying said second image data on said display screen having said second aspect ratio,
wherein said image processing apparatus enlarges said first image data to be displayed near the center of said display screen at said second enlargement ratio and enlarges said first image data to be displayed near both ends of said display screen bisymmetrically at said first enlargement ratio.

8. The television receiver according to claim 7,
wherein said image operation section comprises:
a function calculating section for calculating a delta value as the inverse of said third enlargement ratio;
a position operation section for outputting said horizontal display position at the next time and said third enlargement ratio at the next time that is the inverse of said delta value at the next time on the basis of said delta value at the next time and said horizontal display position at the previous time; and
an operation control section for outputting a reset signal to said function calculating section and said position operation section, when said horizontal display position at the next time reaches an end of said display screen, and
said function calculating section calculates said delta value at the next time, employing said delta value at the previous time and the numerical values obtained while calculating said delta value at the previous time, and resumes the calculation of said delta value on the basis of a first initial value as a preset initial value when said reset signal is input, and
said position operation section resumes the output of said horizontal display position on the basis of a second initial value as a preset initial value when said reset signal is input.

9. The television receiver according to claim 8,
wherein said operation control section outputs an enable signal for enabling said function calculating section to calculate said delta value, and said function calculating section calculates said delta value only if said enable signal is input.

10. The television receiver according to claim 7, 8 or 9
wherein said image operation section has a preset upper limit enlargement ratio and sets the enlargement ratio of said first image data to said upper limit enlargement ratio, when said first enlargement ratio reaches said upper limit enlargement ratio.

11. The television receiver according to claim 7, 8, 9 or 10
wherein said image operation section has apreset reference horizontal display position, and sets the enlargement ratio of said first image data to a preset reference enlargement ratio when said horizontal display position reaches said reference horizontal display position.

12. The television receiver according to claim 7, 8, 9, 10 or 11
wherein said image operation section has a plurality of preset reference enlargement ratios, and can select any one of said plurality of reference enlargement ratios on the basis of the input of a selection signal from the outside.

13. The television receiver according to claim 7, 8, 9, 10, 11 or 12
wherein said first enlargement ratio and said second enlargement ratio are equal at the boundaries between near the center of screen and near both ends of screen.

14. The television receiver according to claim 13,
wherein said first enlargement ratio is a function of the position on said display screen in the horizontal direction.

15. The television receiver according to claim 14,
wherein the inverse of said first enlargement ratio is a second order function.
